Europäisches Patentamt

European Patent Office

Office européen des brevets

(19)

(11) Publication number: **0 348 358**

A2

# EUROPEAN PATENT APPLICATION

(12)

(21) Application number: 89830230.2

(22) Date of filing: 23.05.89

(51) Int. Cl.⁴: **B 60 T 8/50**

(30) Priority: 22.06.88 IT 6758388

(43) Date of publication of application:
27.12.89 Bulletin 89/52

(84) Designated Contracting States:
AT BE DE ES FR GB IT NL SE

(71) Applicant: INDUSTRIE MAGNETI MARELLI S.r.l.
Via Adriano 81
I-20128 Milano (IT)

(72) Inventor: Majno, Bruno
Via Guerrazzi, 51
I-20052 Monza (Milano) (IT)

Saini, Alberto
INDUSTRIE MAGNETI MARELLI S.r.l. Via Adriano, 81
I-20128 Milano (IT)

(74) Representative: Quinterno, Giuseppe et al
c/o Jacobacci-Casetta & Perani S.p.A. Via Alfieri, 17
I-10121 Torino (IT)

(54) A braking system for motor vehicles with an anti-locking function for at least one monitored wheel.

(57) The system includes
a master cylinder (1) for supplying operating fluid pressure to the braking elements (3) of the wheels,
a pumping actuator (7) for the anti-locking function,
first and second solenoid valves (8, 9), of which the first (8) is normally open to enable the supply of pressure from the master cylinder (1) to the braking element (3) of the at least one monitored wheel during normal braking, and the second (9) is normally closed to disconnect the pumping actuator (7) from said braking element (3), and
a control unit (6) arranged to cause:
the closure of the first solenoid valve (8) and the opening of the second (9), in order to disconnect the master cylinder (1) from the braking element (3) of the at least one monitored wheel and to couple the latter (3) to the pumping actuator (7), when the at least one controlled wheel tends to become locked during normal braking, and
the establishment of anti-lock brake-release/braking cycles during each of which fluid is allowed to flow back from the braking element (3) of the at least one monitored wheel to the pumping actuator (7) and pressure is then supplied to the braking element (3) again by means of the actuator (7) until the at least one monitored wheel tends to become locked again.
During the anti-lock braking stages, the control unit (6) is also arranged to cause the opening of the first solenoid valve (8) and the closure of the second (9) when the at least one monitored wheel is released and the pressure supplied to the associated braking element (3) is substantially equal to that applied by the master cylinder (1) at the time when the monitored wheel first became locked during normal braking.

Bundesdruckerei Berlin

EP 0 348 358 A2

## Description

### A braking system for motor vehicles with an anti-locking function for at least one monitored wheel

The present invention relates to a braking system for motor vehicles with an anti-locking function for at least one monitored wheel.

More specifically, the subject of the invention is a braking system including a master cylinder for supplying operating fluid pressure to the braking elements of the wheels, the system also including: a pumping actuator for the anti-locking function, first and second solenoid valves, of which the first is normally open to enable the supply of pressure from the master cylinder to the braking element of the at least one monitored wheel during normal braking and the second is normally closed to disconnect the pumping actuator from the braking system of the at least one monitored wheel; and a control unit arranged to cause, when the at least one monitored wheel tends to become locked during braking:
- the closure of the first solenoid valve and the opening of the second, in order to disconnect the master cylinder from the braking element of the at least one monitored wheel and to couple the latter to the pumping actuator, and
- successive anti-lock brake-release/braking cycles during each of which fluid is allowed to flow back from the braking element of the at least one monitored wheel to the pumping actuator and pressure is then supplied to the braking element again by means of the actuator until the at least one monitored wheel tends to become locked again.

In a known system of the type specified above, the pumping actuator comprises a body formed with a passage in which a pumping piston defining a variable-volume storage chamber with the body is sealingly slidable. The piston cooperates with the diaphragm of a barometric capsule which can be coupled selectively to the atmosphere and to a vacuum source.

During the anti-lock brake-release/braking stages, the pumping actuator can cause the application of a braking pressure which is at least equal to the value of the pressure supplied as a result of the operation of the master cylinder at the time when the at least one monitored wheel became locked during normal braking. If the road-holding conditions of the monitored wheel improve during an anti-lock braking stage, it may be necessary to apply to the at least one monitored wheel a braking pressure greater than that applied to the master cylinder at the time when the wheel first become locked. For this purpose, if known devices, when the piston of the pumping actuator reached its end-of-stroke position, it caused the opening of a ball valve interposed between the master cylinder and the second solenoid valve: since this solenoid valve was open under anti-lock braking conditions, the master cylinder could apply a greater braking pressure (if, of course, the operating pedal continued to be operated by the driver).

As stated, the ability to increase the braking pressure during anti-lock braking stages in known devices required the use of a special ball valve which was intended to be opened by the piston of the pumping actuator when it reached its end-of-stroke position. Moreover, it was necessary to provide a connection between the master cylinder and the valve, usually within the pumping actuator.

This solution was therefore complex and expensive.

Moreover, forces (kick-back) annoying to the driver were applied to the brake pedal, through the valve, during the anti-lock brake-release/braking stages.

An object of the present invention is to produce a braking system of the type defined above which enables the braking pressure to be increased in the anti-lock braking stages beyond the value of the pressure applied by the master cylinder at the time when the monitored wheel become locked, and which is simpler and cheaper to produce and fit, and, in particular, does not need additional valves to achieve this function.

According to the invention this object is achieved by means of a braking system of the type specified above, whose main characteristic lies in the fact that the control unit is also arranged to cause, during the anti-lock braking stages, the opening of the first solenoid valve and the closure of the second when the at least one monitored wheel is released and the pressure supplied to the associated braking element is substantially equal to that applied by means of the master cylinder at the time when the monitored wheel first become locked during braking.

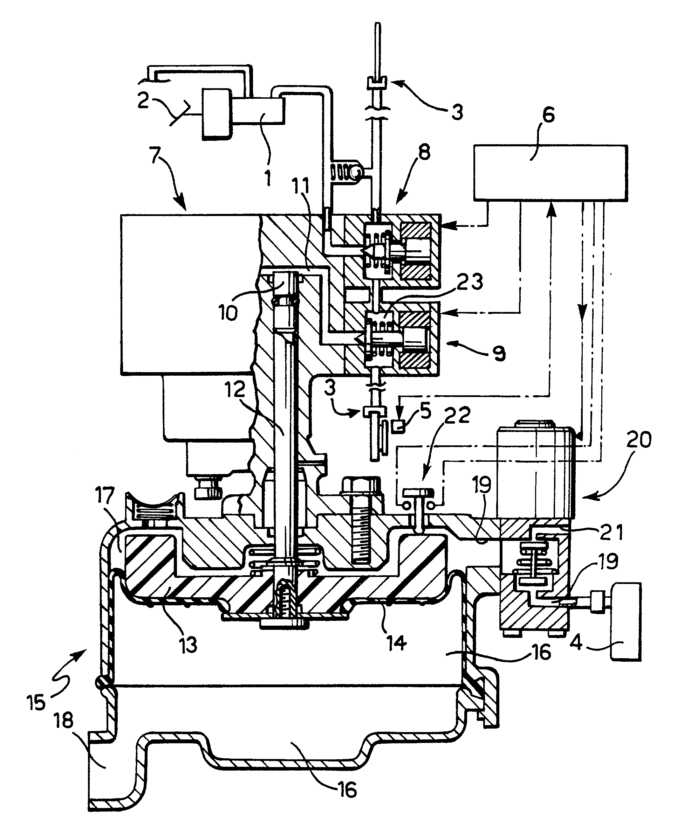

Further characteristics and advantages of the present invention will become clear from the detailed description which follows with reference to the appended drawing, provided by way of non-limiting example, which shows schematically the structure of a braking system to which the invention is applied.

The drawing shows schematically part of a braking system for motor vehicles with an anti-locking function for the wheels.

the braking system is of substantially known type as regards its general operating criteria. For this reason, the general operating criteria will be repeated below only in so far as is strictly necessary for the purposes of an understanding of the invention.

The drawing shows a master cylinder, schematically indicated 1, which is operable by means of a pedal 2 to supply a fluid braking pressure to the braking elements of the wheels of a motor vehicle. The drawing shows the braking elements associated with two wheels, for example, a front wheel situated on one side of the motor vehicle and the rear wheel situated on the opposite side.

A sub-atmospheric pressure (vacuum) source in the vehicle, for example, the inlet manifold of the internal combustion engine, is indicated 4.

A sensor, for example, of the so-called phonic-wheel type, is indicated 5 and is associated with one wheel of the motor vehicle, which will be defined below as the "monitored wheel".

In operation, the sensor 5 provides an electronic control unit 6 with electrical signals indicative of the rate of rotation of the monitored wheel. On the basis of these signals, the unit 6 can detect the fact that the monitored wheel is starting to lock.

The system also includes a pumping actuator, generally indicated 7, associated structurally and functionally with two solenoid valves 8 and 9, which are of the two-way, two-position type in the embodiment illustrated. As will be made clearer below, the solenoid valves control the transmission of pressurised fluid between the master cylinder 1 or the pumping actuator 7 and the braking elements 3.

The actuator 7 includes a piston 10 which is mounted for sliding in a chamber 11 and the movement of which is controlled by a thrust rod 12 with an end head 13 mounted on the diaphragm 14 of a barometric capsule 15 with two chambers 16 and 17. The first chamber 16 communicates directly with the atmosphere through an aperture 18, while the second chamber 17 communicates with the vacuum source 4 through a duct 19 in which is interposed a solenoid valve 20 which, when excited, puts the chamber into communication with the atmosphere through a passage 21. The excitation of the solenoid valves 8, 9 and 20 is controlled by the unit 6 according to criteria which will better be described below, in dependence on the signals provided by the sensor 5 and by a further sensor 22 associated with the barometric capsule 15 for providing a signal when the pumping piston 10 is in the end-of-stroke position shown.

With reference to the solenoid valves 8 and 9, the former is normally open and enables communication between the master cylinder 1 and the braking elements 3. In particular, the master cylinder 1 can communicate with the braking element of the monitored wheel through the normally-open valve 8 and a passage 23 formed around the obturator of the valve 9.

The solenoid valve 9 is normally closed and prevents communication beween the chamber 11 of the pumping actuator 7 and the braking elements 3.

Under normal travelling conditions of the motor vehicle (absence of braking) the solenoid valves 8, 9 and 20 are kept in the de-activated condition shown in the drawing. The pumping actuator 7 is therefore in the condition illustrated, while the solenoid valves 8 and 9 enable free communication between the master cylinder 1 and the braking element 3.

In order to operate the brakes, the driver acts on the pedal 2 so that the fluid pressure generated by the master cylinder of the system is propagated through the solenoid valves 8 and 9 to the braking members 3.

If the sensor 5 sends the unit 6 a signal which indicates that the monitored wheel is tending to lock, the unit causes the excitation of the solenoid valves 8, 9 and 20. The valve 8 disconnects the master cylinder 1 from the operating members for the brakes of the wheels. The solenoid valve 9 puts the braking members 3 into communication with the chamber 11 of the pumping actuator 7, whilst the chamber 17 is put into communication with the atmosphere by the solenoid valve 20. The piston 10 is consequently moved (downwards as seen in the drawing) and, in this situation, the pressurised braking liquid flows back from the braking members 3 to the chamber 11 of the pumping actuator. Thus, as a result of the withdrawal of the operating fluid pressure, an anti-locking (ABS) action is achieved on the wheel or wheels which run the risk of locking and starting to slip on the ground.

As soon as the tachometric signal generated by the sensor 5 indicates that the monitored wheel has started to rotate again at a rate such as to ensure acceptable road-holding, the unit 6 re-establishes the conditions which enable the resumption of a braking action on the wheels. For this purpose, the unit 6 causes the solenoid valve 20 to be de-activiated again, re-connecting the chamber 17 of the pumping actuator 7 to the vacuum source 4. The pressure therefore falls again in the chamber 17 so that, as a result of the pressure difference which is established relative to the chamber 16 (which is in communication with the atmosphere), the thrust rod 12 and hence the piston 10 are thrust upwards again, resulting in the pumping of the liquid previously collected in the chamber 11 towards the braking elements 3.

During the anti-lock braking stage, the control unit 6 can send to the solenoid valve 9 an operating signal constituted by a train of pulses intended to cause the rhythmic opening of the valve with the consequent pulsed re-application of the pressure for operating the braking elements 3.

At this stage of operation (anti-lock rebraking), therefore, the piston 10 acts as pumping means operated by the vacuum created in the chamber 17.

If the monitored wheel tends to become locked again during the anti-lock braking action effected by the pumping actuator 7, the unit 6 establishes a new brake-release/braking cycle by the excitation/deactivation of the solenoid valve 20, so as to allow the liquid to flow back from the braking elements 3 to the chamber 11 of the actuator 7 again and then (as soon as the monitored wheel regains its grip) to be pumped to the braking elements again.

During the course of an anti-lock braking stage, that is, braking achieved by means of the pumping action of the actuator 7, the grip of the monitored wheel may improve to the point where it can tolerate a braking force greater than that applied by means of the master cylinder 1 at the time when the monitored wheel initially started to become locked during normal braking, without becoming locked. In this case, with the clear aim of reducing the braking distance, the unit 6 causes the opening of the solenoid valve 8 and the reclosing of the solenoid valve 9 so as to re-establish communication between the master cylinder 1 and the braking elements 3. Further operation of the brake pedal 3 consequently enables the desired increase in the braking force applied to the wheels.

The increase in the pressure of the operating fluid during the anti-lock braking stages is possible according to the invention without the use of additional valves, but simply by means of a suitable programming of the control unit 6.

In addition to a simplification of the structure and installation of the system, the invention also prevents the annoying problem represented by the kick-back transmitted to the driver's foot through the brake pedal during antiskid braking.

## Claims

1. A braking system for motor vehicles with an anti-locking function for at least one monitored wheel, including a master cylinder (1) for supplying operating fluid pressure to the braking elements (3) of the wheels, the system also including:

a pumping actuator (7) for the anti-locking function,

first and second solenoid valves (9), of which

the first (8) is normally open to enable the supply of pressure from the master cylinder (1) to the braking element (3) of the at least one monitored wheel during braking and

the second (9) is normally closed to disconnect the pumping actuator (7) from the braking element of the at least one monitored wheel, and

a control unit (6) arranged to cause, when the at least one monitored wheel tends to become locked during normal braking:

the closure of the first solenoid valve (8) and the opening of the second (9), in order to disconnect the master cylinder (1) from the braking element (3) of the at least one monitored wheel and to couple the latter to the pumping actuator (7), and

successive anti-lock brake-release/braking cycles during each of which fluid is allowed to flow back from the braking element (3) of the at least one monitored wheel to the pumping actuator (7) and pressure is then supplied to the braking element (3) again by means of the actuator (7) until the at least one monitored wheel tends to become locked again,

characterised in that the control unit (6) is also arranged to cause, during anti-lock braking stages, the opening of the first solenoid valve (8) and the closure of the second solenoid valve (9) when the at least one monitored wheel is released and the pressure supplied to the associated braking element (3) is substantially equal to that applied by means of the master cylinder (1) at the time when the monitored wheel first became locked during normal braking.